# EUROPÄISCHE PATENTSCHRIFT

(11) **EP 2 181 353 B1**
(45) Veröffentlichungstag und Bekanntmachung des Hinweises auf die Patenterteilung: **04.06.2014**
(21) Anmeldenummer: 08773623.7
(22) Anmeldetag: 25.06.2008
(51) Int. Cl.: G02B 21/24

(54) **MIKROSKOPKÖRPER ODER -STATIV MIT EINER EINRICHTUNG ZUM OBJEKTIVWECHSEL, INSBESONDERE FÜR MIKROSKOPOBJEKTIVE VON FIXED STAGE-MIKROSKOPEN**
MICROSCOPE BODY OR STAND WITH A DEVICE FOR CHANGING AN OBJECTIVE, IN PARTICULAR FOR MICROSCOPE OBJECTIVES IN FIXED STAGE MICROSCOPES
CORPS OU STATIF POUR MICROSCOPE AVEC UN DISPOSITIF DE CHANGEMENT D'OBJECTIF, EN PARTICULIER D'OBJECTIF DE MICROSCOPE À STATIF FIXE

(30) Priorität: 26.06.2007 DE 102007029402
(43) Veröffentlichungstag der Anmeldung: 05.05.2010
(73) Patentinhaber: Carl Zeiss Microscopy GmbH, 07745 Jena (DE)
(72) Erfinder: SCHNUELL, Peter, 37130 Gleichen (DE); HERMANN, Andreas, 37130 Gleichen (DE)
(74) Vertreter: Scholze, Humbert
(86) Internationale Anmeldenummer: PCT/EP2008/005115
(87) Internationale Veröffentlichungsnummer: WO 2009/000508

(56) Entgegenhaltungen:
- WO-A-2004/077123
- DE-A1- 10 225 194
- JP-A- 11 109 251
- JP-A- 2001 091 853
- US-A- 4 025 171
- US-B1- 6 268 958

## Beschreibung

Die Erfindung bezieht sich auf eine Einrichtung zum Objektivwechsel, insbesondere für Mikroskopobjektive, welche in den Mikroskopstrahlengang, ohne das Objekt in irgendeiner Weise zu beeinträchtigen, ein- und ausgeschaltet werden können. Die Anwendung erweist sich als besonders vorteilhaft bei fixed stage-Mikroskopen. Sie kann jedoch auch bei anderen Mikroskoptypen eingesetzt werden.

Einrichtungen zum Objektivwechsel, sog. Objektivwechsler, sollen zum einen eine möglichst große Anzahl von Objektiven bereitstellen, zum anderen muss die Positionierung einzelner Objektive in der optischen Achse des betreffenden Strahlenganges so genau sein, dass die Parfokalität für alle Objektive gegeben ist.

Allgemein bekannt sind Einrichtungen zum Wechseln von Objektiven bei Mikroskopen unterschiedlicher Typen, welche einen Revolver umfassen, in welchem die zu wechselnden Objektive eingeschraubt sind, die dann nach Bedarf durch Drehen des Revolvers in eine Position in der optischen Achse des Strahlenganges des Mikroskops eingebracht werden. Dieser Revolver besitzt meist eine gegen die optische Achse geneigte Drehachse und kann sowohl über als auch unterhalb des Objekttisches eines Mikroskops angeordnet sein, je nach dem, ob es sich um ein aufrechtes oder um ein inverses Mikroskop handelt. Die Objektive werden dann aus einer Speicherposition in eine, in der optischen Achse des Strahlenganges vorgesehene Arbeitsposition durch Drehung des Revolvers gebracht. Bei der Drehung des Revolvers zwecks Einschaltung eines ausgewählten Objektivs in die optische Achse des Strahlenganges bewegt sich dann die Frontpartie (die dem Objekt zugewandte Seite) des Objektivs tangential zur Objektebene in einem Abstand, welcher u.a. von der Vergrößerung des betreffenden Objektivs abhängt. Das Objektiv läuft dabei auf einer zur Ebene des Mikroskoptisches geneigten Kreisbahn mit einem großen Kreisdurchmesser, der etwa dem Durchmesser des Objektivtellers entspricht. Durch diesen großen Kreisdurchmesser und den in der Regel geringen Neigungswinkel der Kreisbahn beschränkt ein derartiger Objektivwechsler den das Objekt oder die Probe umgebenden Raum.

Auch bei Mikroskopen mit festem Objekttisch (fixed stage-Mikroskopen) und mit einer Fokussierung durch Verschieben des Objektivs relativ zum Objekt (Objektivfokussierung) sind mehrere Objektive in einem Objektivwechsler erwünscht und vorteilhaft, um einerseits mit einer schwachen Objektiwergrößerung einen größeren Objektbereich zu übersehen und um andererseits bei einer geeigneten höheren Vergrößerung eine ausgewählte Stelle des Objektes genauer untersuchen zu können.

Fixed stage-Mikroskope werden bevorzugt in der Neurophysiologie und Neurobiologie für die Anwendung der sog. Patch Clamp-Technik an üirnschnittpräparaten eingesetzt. Dabei ist eine tangentiale Bewegung des Objektivs relativ zum zu untersuchenden Objekt nicht nur unerwünscht, sondern sie stellt auch eine Gefährdung für das Präparat oder das Objekt sowie für die im Umfeld positionierten Gerätschaften, wie Mikromanipulatoren, Perfusionseinrichtung oder Gefäße für Präparate, dar. Da sich oftmals das Objekt und das Objektiv in einem flüssigen Medium befinden, tritt durch die Tangentialbewegung des Objektivs eine horizontale Flüssigkeitsströmung auf, die das durch "Patch Clamp" fixierte Objekt- oder Präparatdetail aus der eingestellten Position verschieben kann. Aus diesem Grunde sollte das Objektiv sanft und langsam sowie parallel, also in Richtung zur optischen Achse in die Flüssigkeit eintauchen. Auf diese Weise würde auch eine Berührung von Teilen durch das Objektiv in der Probenumgebung weitestgehend vermieden.

Es sind ferner Schiebe- und Wippeneinrichtungen bekannt, welche diese Forderungen nur teilweise erfüllen. Bei diesen Einrichtungen können jedoch nur zwei Objektive aufgenommen werden, wobei die eine Speicherposition sich zwischen dem Beobachter und dem Präparat befindet, wodurch die Zugänglichkeit und die Übersichtlichkeit erschwert werden, was besonders bei fixed stage-Mikroskopen von Nachteil ist.

Aus der US7046437 ist beispielsweise eine Vorrichtung zum Objektivwechseln bekannt, mit welcher zwei Objektive durch einen Wipp- bzw. Kippmechanismus zwischen Arbeitsposition in der optischen Achse und Speicherposition außerhalb der optischen Achse gewechselt werden. In dieser Ausführung ragt insbesondere der Hebel für den Wechselmechanismus und in der einen Position des Objektivwechslers ein Objektiv in den Raum zwischen Probe und Beobachter rein, so dass die Zugänglichkeit und Sicht des Probenraumes eingeschränkt ist.

Aus der US 6,359,731 ist eine Vorrichtung zum Objektivwechseln bekannt, bei der zwei Objektive durch einen kombinierten Schiebe- und Hebemechanismus gewechselt werden. Auch hier befindet sich in der einen Position des Wechslers ein Objektiv in dem Raum zwischen Probe und Beobachter und schränkt diesen Raum ein. Die Wechselvorrichtung ist also nicht so ausgelegt, dass sie diesen Raum für Experimente und Manipulationen an der Probe freihält.

Aus der DE 198 22 870 ist eine Vorrichtung zum Objektivwechseln bekannt, bei der abwechselnd zwei Objektive durch einen Schlitten in die Arbeitsposition in der optischen Achse gebracht werden können.

Wenngleich bei diesen Lösungen die zwei Objektive stets in einer Richtung von dem Benutzer weg bzw. zu diesem hin bewegt werden und so der die Probe seitlich umgebende Raum gut für weitere Gerätschaften genutzt werden kann, befindet sich zwischen Probe und Beobachter immer eine Speicherposition eines Objektives, die die Zugänglichkeit und die Übersichtlichkeit erschwert.

In WO 2004/077123 wird eine Einrichtung zum Objektivwechsel, insbesondere für Mikroskopobjektive beschrieben. Diese Einrichtung umfasst eine Halterung, welche am Mikroskopkörper oder -stativ angeordnet ist. In der Halterung befindet sich eine Revolveranordnung zum Einbringen zu wechselnder Objektive mit einem drehbar gelagerten Revolverköper. US 6,268,958 B1 beschreibt eine Vorrichtung zum Objektivwechsel mit einem verstellbaren Objektiv.

So liegt der Erfindung die Aufgabe zu Grunde, eine Einrichtung zum Objektivwechsel bei Mikroskopen zu schaffen, welche bei geringem Platzbedarf und einer schlanken Bauweise eine gute Zugänglichkeit und Übersichtlichkeit des Probenraumes und beim Wechsel der Objektive eine geringst mögliche Einschränkung und Beeinflussung dieses Probenraumes gewährleistet.

Erfindungsgemäß wird diese Aufgabe mit einer gemäß den Merkmalen des Hauptanspruches ausgestalteten Einrichtung zum Objektivwechsel gelöst. In den weiteren Unteransprüchen sind Einzelheiten und Ausgestaltungen der Erfindung offenbart. Damit ist weitestgehend gewährleistet, dass sich nun keine Speicherposition eines Objektives mehr im Raum zwischen dem Beobachter und der Probe befindet.

So sind zur manuellen Verschiebung der Objektivaufnahmen in Richtung der optischen Achse des Strahlenganges Stellmittel in Form von, durch den Revolverkörper hindurchragenden Stegen vorgesehen, wobei die Stege bei einer Höhenverstellung der Objektivaufnahme durch einen an einem äußeren Trägerteil der Revolveranordnung angebrachten Drehknopf mit einem exzentrisch bezüglich der Drehachse des Drehknopfes ausgeführten Rollenlager verstellbar sind und das äußere Trägerteil mit der Halterung verbunden ist.

Zur Realisierung einer präzisen und leichtgängigen Lagerung der Objektivaufnahmen ist es vorteilhaft, wenn die Objektivaufnahmen im Revolverkörper in jeweils einem an sich bekannten Vierpunktlager gelagert sind. Hierbei sind vorzugsweise Wälzlager vorzusehen.

Ferner ist es vorteilhaft, wenn die Drehachse des Revolverkörpers derart in der Revolveranordnung vorgesehen ist, dass die jeweilige, in der optischen Achse positionierte Objektivaufnahme mit dem darin eingesetzten Objektiv dem Beobachter benachbart ist.

Vorteilhaft ist es auch, dass die Objektivaufnahmen Längen und Einschraubgewinde aufweisen, welche den in den Objektivaufnahmen eingesetzten Objektiven entsprechend angepasst sind.

Zur Verringerung der Masse der Revolveranordnung sind in dieser vorteilhaft Aussparungen und/oder Durchbrüche vorgesehen.

Die Erfindung soll nachstehend an einem Ausführungsbeispiel näher erläutert werden. In der Zeichnung zeigen
- Fig.1: eine Gesamtansicht einer Einrichtung zum Objektivwechseln mit einer Kulisse im Trägerteil,
- Fig.2: die Revolveranordnung der Einrichtung mit vier Objektivaufnahmen,
- Fig.3: einen Schnitt durch den Revolverkörper,
- Fig.4: eine Revolveranordnung mit V-förmiger Führungsfläche,
- Fig.5: eine Revolveranordnung mit zwei eingesetzten Objektiven,
- Fig.6: eine perspektivische Seitenansicht der erfindungsgemäßen Einrichtung und
- Fig.7: eine Ausführungsform nach Fig. 6 in der Draufsicht.

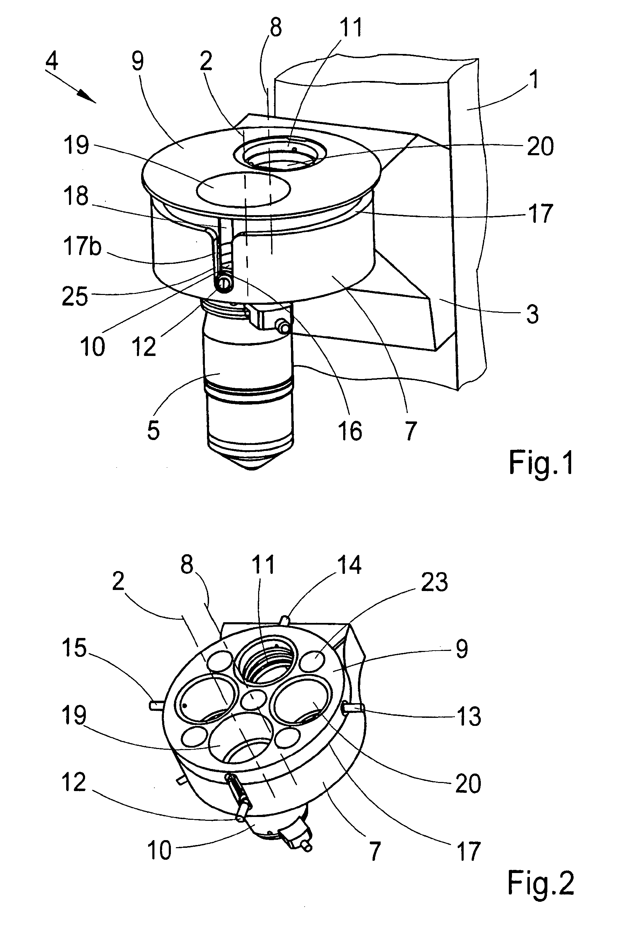

In den Figuren 1 bis 5 werden für weitestgehend funktionsgleiche Elemente und Baugruppen gleiche Bezugszeichen verwendet.

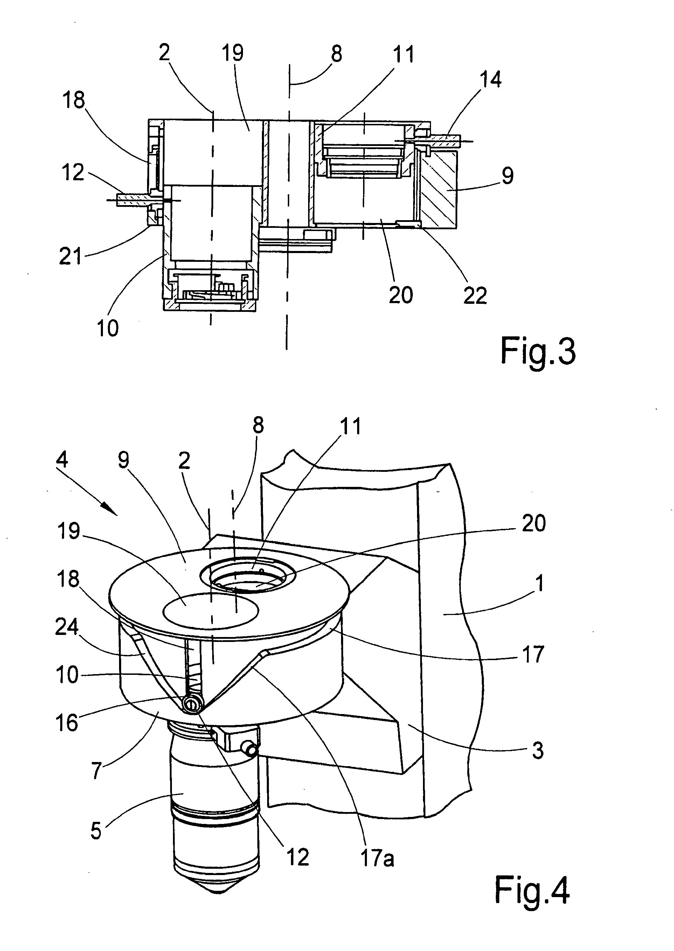

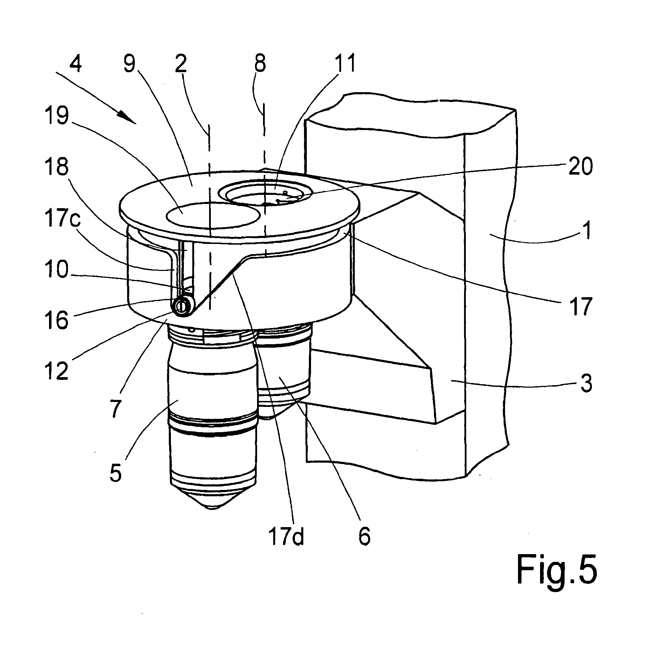

In Fig.1 ist eine Einrichtung zum Wechseln von Objektiven dargestellt, welche eine am Mikroskopkörper 1 oder Mikroskopstativstativ in Richtung der optischen Achse 2 des Mikroskopstrahlenganges verstellbar gelagerte Halterung 3 umfasst. Diese Halterung 3 trägt eine Revolveranordnung 4 zum Einbringen zu wechselnder Objektive 5; 6, in die optische Achse 2 des Mikroskopstrahlenganges, wobei das Objektiv 6 in der Fig.5 sichtbar dargestellt ist. Die Revolveranordnung 4 umfasst ein äußeres Trägerteil 7, welches mit der Halterung 3 verbunden ist und in welchem ein, um eine Drehachse 8 drehbarer, vorzugsweise arretierbarer Revolverkörper 9 gelagert ist. Die Drehachse 8 ist vorteilhaft so in der Revolveranordnung 4 vorgesehen, dass eine in der optischen Achse 2 positionierte Objektivaufnahme 10 oder 11 und das darin befindliche Objektiv 5 oder 6 dem Beobachter benachbart ist. Bei der dargestellten Einrichtung verläuft die Drehachse 8 parallel zur optischen Achse 2. Bei konstruktiv anders aufgebauten Objektivwechseleinrichtungen, welche hier nicht dargestellt und beschrieben sind, kann die Drehachse 8 grundsätzlich auch unter einem Winkel, d.h. nicht parallel, zur optischen Achse 2 angeordnet sein. Im Revolverkörper 9 sind mindestens zwei Objektivaufnahmen 10; 11 (Fig.3) vorgesehen, welche in Richtung der optischen Achse 2 verschiebbar gelagert sind.

An den Objektivaufnahmen 10; 11 sind Stellmittel 12 bis 15 (Fig.2) angeordnet, mit denen nach einer erfolgten Positionierung einer ein Objektiv 5 tragenden Objektivaufnahme 10 im wesentlichen in der optischen Achse 2 des Strahlenganges eine Verschiebung dieser Aufnahme 10 in Richtung der optischen Achse 2 durchgeführt werden kann. Diese an den Objektivaufnahmen 10; 11 angeordneten Stellmittel 12 bis 15 ragen durch eine parallel zur optischen Achse 2 angeordnete, schlitzförmige Führung 18 durch den Revolverkörper 9 hindurch. Für diese Stellmittel 12 bis 15 (Fig.2) können Führungsstifte (Fig.2) oder auf Achsen gelagerte Rollen 16 (Fig.1) zur Anwendung kommen, welche an einer Führungsfläche 17 des äußeren Trägerteils 7 anliegen. Die Führungsfläche 17 ist derart ausgebildet, dass, sobald eine der mindestens zwei Objektaufnahmen 10 oder 11 eine Positionierung in der optischen Achse 2 der Strahlenganges erreicht bzw. eingenommen hat, nur diese betreffende Objektivaufnahme 10 (Fig.2 und 3) zusammen mit dem dort eingesetzten Objektiv 5 in Richtung der optischen Achse 2 bewegt bzw. verstellt wird, ohne quer zur optischen Achse 2 eine Bewegung auszuführen. Die Führungsfläche 17 bilden hier im Bereich der Arbeitsposition die Flanken 17b einer Kulisse 25, in welcher die Rolle 16 geführt ist.

Fig.3 zeigt einen Schnitt durch den Revolverträger 9 mit den zwei Objektivaufnahmen 10 und 11, die in Bohrungen 19 und 20 des Revolverträgers 9 angeordnet sind und welche darin in Richtung der optischen Achse 2 verschiebbar gelagert sind. Um eine Leichtgängigkeit und eine hohe Präzision bei der Verschiebung der Objektivaufnahmen 10 und 11 zu gewährleisten, sind diese in an sich bekannten Vierpunktlagern 21; 22 in Wälzkörpern gelagert. Alternativ ist auch die Lagerung in einem Rollen- oder Kugelkäfig denkbar. Wie dargestellt, besitzen die Objektivaufnahmen 10; 11 zwecks Anpassung an unterschiedliche Objektive unterschiedliche Längen. In an sich bekannter Weise können die Objektive in die Objektivaufnahmen 10; 11 geschraubt werden, wobei das jeweilige Einschraubgewinde dem Gewinde der Objektive angepasst sein muss.

Zur Verringerung der Masse der Revolveranordnung sind vorzugsweise im Revolverkörper 9 Aussparungen 23 und/oder Durchbrüche vorgesehen (siehe Fig. 2).

Fig.4 zeigt eine Einrichtung, bei welcher die Führungsfläche 17 des Trägerteils 7 im Bereich der Arbeitsposition einen V-förmigen Abschnitt 24 besitzt, wodurch gewährleistet wird, dass die Objektivaufnahme 10 zusammen mit dem jeweiligen Objektiv 5 durch Abwälzen der Rolle 16 an der Führungsfläche 17 in die Arbeitsposition gebracht wird. Durch die Steilheit der Flanke 17a des V-förmigen Abschnittes 24 kann der Umfang des Eingriffs des Objektivs 5 in den Probenraum bestimmt werden. Gegenüber vom Stand der Technik erlaubt diese Ausführungsform dennoch einen, den Probenraum erheblich weniger einschränkenden Wechsel des Objektives 5.

In Fig. 5 ist eine Ausführung dargestellt, bei welcher die Führungsfläche 17 im Bereich der Arbeitsposition eine zur optischen Achse 2 parallel verlaufende Flanke 17c und eine zur optischen Achse 2 geneigt unter einem Winkel verlaufende Flanke 17d besitzt.

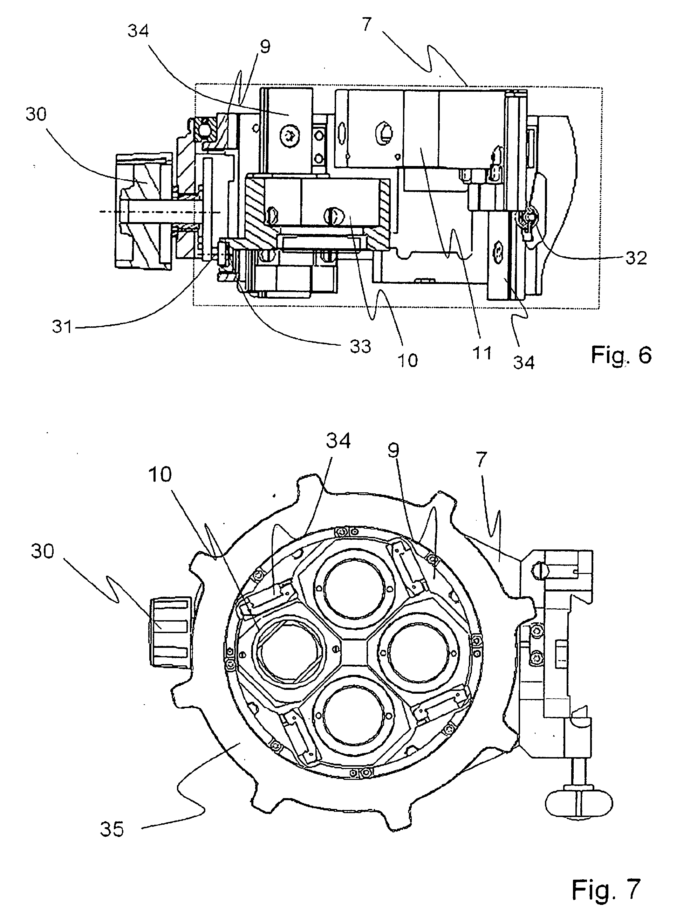

Fig. 6 zeigt ähnlich wie Figur 3 eine perspektivische Seitenansicht. Im Unterschied zu den vorigen Ausführungsformen sind hier die Stellmittel als Stege (33) ausgeführt, die eine Breite von einigen Millimetern aufweisen. Die Aussparung im Trägerteil (7) ist für die Höhenverstellung der Objektivaufnahme (10) entsprechend breit ausgeführt. Für die komfortable Höhenverstellung ist hierbei zusätzlich ein Drehknopf (30) am Trägerteil (7) angebracht. Dieser umfasst ein zu seiner Drehachse exzentrisch ausgeführtes Rollenlager (31), dass bei Drehung des Drehknopfes (30) eine kreisförmige Bewegung ausführt. Ist die Objektivaufnahme (10) in Arbeitsposition gebracht wird der Steg (33) durch das Rollenlager (31) abgestützt. Durch die Schwerkraft folgt die Objektivaufnahme (10) damit der Drehbewegung des Drehknopfes (30) und lässt sich in einfacher Weise nach unten und wieder nach oben bewegen.
Die Objektivhalter (10; 11) werden bei Wechselbewegung des Revolverkörpers (9) durch zusätzliche Rastfedern (32) derart fixiert, dass die Stellmittel (12 bis 15) nicht auf der Kulisse oder Führungsfläche (17, 25) aufliegen um so eine weitgehend reibungsfreie Drehbewegung zu ermöglichen. Dabei dient die Kulisse oder Führungsfläche als Absicherung gegen etwaige Erschütterungen. Wenn bei einer Erschütterung die Federkraft der Rastfeder (32) überschritten wird, werden die Objektivaufnahmen (10; 11) auf der Kulisse oder in der Führungsfläche (17, 25) aufgefangen und dringen nicht mit großem Impuls in den Probenraum ein.
Die Objektivhalter sind weiterhin über Profilschienen (34) mit dem Revolverkörper (9) verschiebbar verbunden. Vorteilhaft ist hierbei ein Rollenlager zum Eingriff in die Profilschiene vorzusehen, um eine reibungsminimierte Höhenverstellung zu ermöglichen.

Fig. 7 zeigt die Ausführungsform gemäß Figur 6 in der Draufsicht. Dabei sind 4 Objektivaufnahmen (10) und dazugehörige Profilschienen (34) zu erkennen. Das Trägerteil (7) weist zudem Mittel auf, um den Objektivrevolver am Stativ zu fixieren. Ein Kranz (35) ist mit dem Revolverkörper (9) fest verbunden und weist hier 8 Nasen auf, die im Einbau des Revolverkörpers über die Kontur des Trägerteils (7) hinausragen und so für den Benutzer des Mikroskops einen leicht zugänglichen Angriffspunkt für die Ausübung der Drehbewegung des Revolverkörpers bieten.

Schließlich sei darauf hingewiesen, dass die voranstehend erörterten Ausführungsbeispiele lediglich zur Beschreibung der erfindungsgemäßen Lösung dienen, diese jedoch nicht nur auf diese Ausführungsbeispiele einschränkt ist.

Ohne Beschränkung sind jedoch für die Führungsflächen 17 nach Figur 4 und 5 auch andere Formen denkbar, die z.B. im Bereich des Überganges von der Speicherposition zu der Arbeitsposition eine Rundung besitzen. Außerdem kann an der Arbeitsposition eine kleine Vertiefung (nicht dargestellt) in der Führungsfläche 17 vorgesehen sein, so dass das Objektiv 5 zum Wechsel nur leicht angehoben werden muss, ansonsten aber auf den Führungsflächen 17 gleitet. Außerdem ist es möglich, anstelle der offenen Führungsfläche 17 eine in das Trägerteil 7 integrierte und nach außen nicht sichtbare Führung in Form einer entsprechend geformten Nut zu verwenden.

Die Erfindung wurde mit Bezug auf besondere Ausführungsformen beschrieben. Es ist für einen Fachmann jedoch selbstverständlich, dass Änderungen und Abwandlungen durchgeführt werden können, ohne dabei den Schutzbereich der Ansprüche zu verlassen.

### Bezugszeichenliste

- 1: Mikroskopkörper
- 2: optische Achse
- 3: Halterung
- 4: Revolveranordnung
- 5; 6: Objektiv
- 7: Trägerteil
- 8: Drehachse
- 9: Revolverkörper
- 10; 11: Objektivaufnahme
- 12 bis 15: Stellmittel
- 16: Rolle
- 17: Führungsfläche
- 17a bis d: Flanke
- 18: Führung
- 19; 20: Bohrung
- 21; 22: Vierpunktlager
- 23: Aussparung
- 24: Abschnitt
- 25: Kulisse
- 30: Drehknopf
- 31: Rollenlager
- 32: Rastfeder
- 33: Steg
- 34: Profilschiene
- 35: Kranz

## Patentansprüche

1. Mikroskopkörper oder -stativ mit einer einrichtung zum Objektivwechsel, insbesondere für Mikroskopobjektive, umfassend eine Halterung (3), welche an dem Mikroskopkörper oder -stativ angeordnet ist und eine in der Halterung (3) vorgesehene Revolveranordnung (4) zum Einbringen zu wechselnder Objektive (5, 6) in die optische Achse (2) des Strahlenganges des Mikroskops, wobei die Revolveranordnung (4) einen um eine zur optischen Achse (2) des Strahlenganges parallel oder unter einem Winkel verlaufende Drehachse (8) drehbar gelagerten und arretierbaren Revolverkörper (9) umfasst, in welchem mindestens zwei in Richtung der optischen Achse (2) verschiebbar gelagerte Objektivaufnahmen (10; 11) angeordnet sind, in denen die zu wechselnden Objektive (5; 6) eingesetzt sind und Stellmittel (12 bis 15) vorgesehen sind, mit denen nach erfolgter Positionierung einer ein Objektiv (5 oder 6) tragenden Objektivaufnahme (10 oder 11) in der optischen Achse (2) des Strahlenganges eine Verschiebung dieser Objektivaufnahme (10 oder 11) im Wesentlichen in Richtung der optischen Achse (2) realisierbar ist,
**dadurch gekennzeichnet,**
- **dass** die Stellmittel (12 bis 15) zur manuellen Verschiebung der Objektivaufnahmen (10; 11) in Richtung der optischen Achse (2) in Form von durch den Revolverkörper (9) hindurchragenden Stegen (16; 33) ausgebildet sind und
- **dass** die Stege (33) bei einer Höhenverstellung der Objektivaufnahme (10 oder 11) durch einen an einem äußeren Trägerteil (7) der Revolveranordnung (4) angebrachten Drehknopf (30) mit einem exzentrisch bezüglich der Drehachse des Drehknopfes (30) ausgeführten Rollenlager (31) verstellbar sind, wobei das äußere Trägerteil(7) mit der Halterung (3) verbunden ist.

2. Einrichtung nach Anspruch 1, **dadurch gekennzeichnet, dass** die Objektivaufnahmen (10; 11) im Revolverkörper (9) in jeweils einem an sich bekannten Vierpunktlager oder an Profilschienen (34) verschiebbar gelagert sind.

3. Einrichtung nach einem der Ansprüche 1 und 2, **dadurch gekennzeichnet, dass** die Drehachse (8) des Revolverkörpers (9) derart in der Revolveranordnung (4) liegt, dass die jeweilige, in der optischen Achse (2) positionierte Objektivaufnahme (10 oder 11) und das darin gelagerte Objektiv (5 oder 6) dem Beobachter benachbart sein kann.

4. Einrichtung nach einem der Ansprüche 1 bis 3, **dadurch gekennzeichnet, dass** die Objektivaufnahmen (10; 11) entsprechend den in ihnen angeordneten Objektiven (5; 6) angepasste Längen und Einschraubgewinde aufweisen.

5. Einrichtung nach einem der Ansprüche 1 bis 4, **dadurch gekennzeichnet, dass** zur Verringerung der Masse der Revolveranordnung (4) der Revolverkörper (9) Aussparungen (23) und/oder Durchbrüche umfasst.

6. Einrichtung nach Anspruch 1, **dadurch gekennzeichnet, dass** die Revolveranordnung eine Kulisse oder Führungsfläche aufweist wobei die Objektive bei der Drehbewegung des Revolverkörpers (9) durch Rastfedern (32) derart fixiert werden, dass die Stellmittel (12 bis 15) nicht auf der Kulisse oder Führungsfläche (17, 25) aufliegen um so eine weitgehend reibungsfreie Drehbewegung zu ermöglichen, und wobei die Kulisse oder Führungsfläche als Absicherung gegen etwaige Erschütterungen dient.

## Claims

1. Microscope body or stand with a device for changing an objective, in particular for microscope objectives, comprising a holder (3), which is arranged on the microscope body or stand and a revolver arrangement (4), provided in the holder (3), for introducing objectives (5, 6) to be changed into the optical axis (2) of the beam path of the microscope, wherein the revolver arrangement (4) comprises a revolver body (9), which is rotatably mounted about a rotational axis (8) extending parallel or at an angle to the optical axis (2) of the beam path, and lockable, in which revolver body at least two objective receptacles (10; 11), displaceably mounted in the direction of the optical axis (2), are arranged, in which objective receptacles the objectives (5; 6) to be changed are inserted and in which objective receptacles actuating means (12 to 15) are provided, by means of which it is possible to displace an objective receptacle (10 or 11) substantially in the direction of the optical axis (2) after positioning of this objective receptacle (10 or 11), which carries an objective (5 or 6), in the optical axis (2) of the beam path is complete,
**characterized**
- **in that** the actuating means (12 to 15) for manual displacement of the objective receptacles (10; 11) in the direction of the optical axis (2) are embodied in the form of webs (16; 33) protruding through the revolver body (9) and
- **in that**, in the case of a height adjustment of the objective receptacle (10 or 11) by a rotary knob (30) attached on an outer support part (7) of the revolver arrangement (4), the webs (33) can be adjusted by a roller bearing (31) configured to be eccentric with respect to the rotational axis of the rotary knob (30), wherein the outer support part (7) is connected to the holder (3).

2. Device according to Claim 1, **characterized in that** the objective receptacles (10; 11) are displaceably mounted in the revolver body (9), respectively in a four point bearing known per se or on profile rails (34).

3. Device according to either of Claims 1 and 2, **characterized in that** the rotational axis (8) of the revolver body (9) lies in the revolver arrangement (4) in such a way that the respective objective receptacle (10 or 11), positioned in the optical axis (2), and the objective (5 or 6) mounted therein can be adjacent to the observer.

4. Device according to one of Claims 1 to 3, **characterized in that** the objective receptacles (10; 11) have lengths and screw-in threads adapted in accordance with the objectives (5; 6) arranged therein.

5. Device according to one of Claims 1 to 4, **characterized in that** the revolver body (9) comprises recesses (23) and/or openings for reducing the mass of the revolver arrangement (4).

6. Device according to Claim 1, **characterized in that** the revolver arrangement has a connecting link or guide surface, wherein the objectives are fixed by latching springs (32) during the rotational movement of the revolver body (9) in such a way that the actuating means (12 to 15) do not lie on the connecting link or guide surface (17, 25) in order thereby to enable a large frictionless rotational movement, and wherein the connecting link or guide surface serves as protection against possible tremors.

## Revendications

1. Corps ou pied de microscope comprenant un dispositif de changement d'objectif, notamment pour des objectifs de microscope, comprenant un support (3) qui est disposé sur le corps ou le pied de microscope et un arrangement revolver (4) prévu dans le support (3) pour amener les objectifs (5, 6) à changer dans l'axe optique (2) du trajet de rayon du microscope, l'arrangement revolver (4) comprenant un corps de revolver (9) monté en rotation et blocable autour d'un axe de rotation (8) qui s'étend parallèlement ou sous un certain angle par rapport à l'axe optique (2) du trajet de rayon, dans lequel sont disposés aux moins deux logements d'objectif (10, 11) montés de manière à pouvoir être décalés dans la direction de l'axe optique (2), dans lesquels sont introduits les objectifs (5, 6) à changer et sont prévus des moyens de réglage (12 à 15) avec lesquels peut être réalisé un décalage d'un logement d'objectif (10 ou 11) pour l'essentiel dans la direction de l'axe optique (2) après avoir effectué le positionnement de ce logement d'objectif (10 ou 11) portant un objectif (5 ou 6) dans l'axe optique (2) du trajet de rayon,
**caractérisé en ce**
- **que** les moyens de réglage (12 à 15) destinés au décalage manuel des logements d'objectif (10, 11) dans la direction de l'axe optique (2) sont configurés sous la forme de barrettes (16, 33) qui font saillie à travers le corps de revolver (9) et
- **que** les barrettes (33), lors d'un positionnement en hauteur du logement d'objectif (10 ou 11), peuvent être positionnées par un bouton rotatif (30), muni d'un palier à rouleaux (31) exécuté excentrique par rapport à l'axe de rotation du bouton rotatif (30), monté sur une partie porteuse (7) extérieure de l'arrangement revolver (4), la partie porteuse (7) extérieure étant reliée avec le support (3).

2. Dispositif selon la revendication 1, **caractérisé en ce que** les logements d'objectif (10, 11) sont logés dans le corps de revolver (9) de manière à pouvoir être décalés à chaque fois dans un palier à quatre points connu en lui-même ou sur des rails profilés (34).

3. Dispositif selon l'une des revendications 1 et 2, **caractérisé en ce que** l'axe de rotation (8) du corps de revolver (9) se trouve dans l'arrangement revolver (4) de telle sorte que le logement d'objectif (10 ou 11) respectif qui est positionné dans l'axe optique (2) et l'objectif (5 ou 6) logé dans celui-ci peuvent être voisins de l'observateur.

4. Dispositif selon l'une des revendications 1 à 3, **caractérisé en ce que** les logements d'objectif (10, 11) présentent des longueurs et des filets de vissage femelles correspondant aux objectifs (5, 6) qui sont disposés dans ceux-ci.

5. Dispositif selon l'une des revendications 1 à 4, **caractérisé en ce que** pour réduire la masse de l'arrangement revolver (4), le corps de revolver (9) présente des évidements (23) et/ou des traversées.

6. Dispositif selon la revendication 1, **caractérisé en ce que** l'arrangement revolver présente une coulisse ou une surface de guidage, les objectifs étant bloqués par des ressorts d'enclenchement (32) lors du mouvement de rotation du corps de revolver (9) de telle sorte que les moyens de réglage (12 à 15) ne reposent pas sur la coulisse ou sur la surface de guidage (17, 25) afin de permettre ainsi un mouvement de rotation essentiellement sans friction, et la coulisse ou la surface de guidage servant de sécurité contre d'éventuelles secousses.
